# EUROPEAN PATENT SPECIFICATION

(11) **EP 4 163 088 B1**
(45) Date of publication and mention of the grant of the patent: **03.12.2025**
(21) Application number: 22199758.8
(22) Date of filing: 05.10.2022
(51) Int. Cl.: B29C 65/02, B29C 65/78, B65B 9/22, B65B 29/02, B65B 51/22, B65B 59/04, B29C 65/08, B65B 9/207, B65B 9/213, B65B 51/30

(54) **MACHINE FOR MANUFACTURING POUCHES OF COHESIONLESS MATERIAL AND RELATED MAINTENANCE METHOD**
MASCHINE ZUR HERSTELLUNG VON BEUTELN FÜR KOHÄSIONSFREIEN INHALT UND ENTSPRECHENDES WARTUNGSVERFAHREN
MACHINE DE FABRICATION DE SACHETS POUR CONTENANT SANS COHÉSION ET PROCÉDÉ DE MAINTENANCE ASSOCIÉ

(30) Priority: 11.10.2021 IT 202100025961
(43) Date of publication of application: 12.04.2023
(73) Proprietor: Sasib S.p.A., 40013 Castel Maggiore (BO) (IT)
(72) Inventor: GHIOTTI, Roberto, 40133 BOLOGNA (IT)
(74) Representative: Studio Torta S.p.A.

(56) References cited:
- EP-A2- 2 522 490
- WO-A1-2008/114133

## Description

### TECHNICAL FIELD

The present invention relates to a machine for manufacturing pouches of cohesionless material and to a related maintenance method. In particular, the present invention refers to a machine for manufacturing pouches containing tobacco and/or nicotine for oral use (said pouches are commonly known as *"snus*")*.*

In the following of the present description, explicit reference will be made to tobacco, without thereby losing generality since the cohesionless material can consist of other materials such as powdered materials treated with humid substances or pharmaceutical products or food products.

### PRIOR ART

As is known, tobacco pouches are substantially rectangular pouches having a longitudinal development. Each pouch contains a dose of tobacco and is provided with a longitudinal weld and a pair of transverse welds.

A known machine for manufacturing the aforementioned tobacco pouches comprises: conveying means for conveying a band of wrapping material along a packaging path; a wrapping station arranged along the packaging path in which the band of wrapping material is wound to form a tubular element having a longitudinal development; longitudinal welding means for longitudinally welding the tubular element in the area of a respective welding portion; feeding means of the cohesionless material for feeding doses of cohesionless material inside the tubular element; transversal welding means for transversely welding the tubular element so as to form a continuous and alternating succession of welding areas and areas containing a dose of cohesionless material; cutting means for transversely cutting the continuous succession at the welding areas so as to form pouches of cohesionless material.

In particular, the longitudinal welding means comprise a welding surface and an abutment element, planar and having a rectangular shape, arranged opposite to the welding surface. In other words, the abutment element is shaped like a plate and is opposite to the welding surface. Therefore, to carry out said longitudinal welding of the tubular element, the welding surface presses against the abutment element and the welding portion of the tubular element advances arranged between said welding surface and the abutment element.

The abutment element wears quickly and requires frequent maintenance interventions for its replacement: it is usually made of a plastic material, that is, rather soft, in order to guarantee a good quality of the longitudinal welding. However, when the abutment element is worn, the quality of the longitudinal weld is no longer satisfactory and it becomes necessary to replace it.

Therefore, when the abutment element is worn, it is necessary to stop the machine, remove the band of wrapping material intended to form the tubular element, remove the worn abutment element, prepare a new abutment element in the machine, put the band of wrapping material back on and restart the machine.

All these operations, in particular those of removing and reinserting the band of wrapping material, require rather long machine stop times. Furthermore, as mentioned above, the abutment element must be replaced quite frequently.

Patent application WO2008114133A1 describes a machine for the production of tobacco pouches and comprising a feeding system by means of which the tobacco is supplied to a conveyor in a delivery station, from where the tobacco is transported by the conveyor to a transfer station; in the transfer station the tobacco is divided into portions which are fed along a duct to be inserted into corresponding pouches which are closed by means of an ultrasonic welding.

Patent application EP2522490A2 describes a *"form-fill-seal"* machine.

### DESCRIPTION OF THE INVENTION

The object of the present invention is, therefore, to provide a machine for manufacturing pouches of cohesionless material capable of guaranteeing high productivity thanks to reduced maintenance times of the machine.

Furthermore, it is an object of the present invention to provide a maintenance method of the machine which allows to reduce the maintenance times of the machine.

These objects are achieved with a machine for manufacturing pouches of cohesionless material and a related maintenance method according to the attached claims.

The abutment element of the machine object of the present invention has a first face and a second face and is movable between a first position in which the tubular element, in particular the welding portion of the tubular element, is arranged between the welding surface and the first face of the abutment element and a second position in which the tubular element, in particular the welding portion of the tubular element, is arranged between the welding surface and the second face of the abutment element.

The aforesaid conformation of the abutment element and the possibility of moving the same between the two positions allow to reduce the maintenance time of the machine.

When the first face of the abutment element is worn, it will be necessary to stop the machine and move the abutment element to the second position. This does not require removing and reinserting the band of wrapping material. Therefore, the stopping time of the machine object of the present invention is extremely reduced with respect to the stopping time of the known machine described above.

### BRIEF DESCRIPTION OF THE DRAWINGS

The present invention will now be described with reference to the attached drawings, which illustrate a non-limiting embodiment thereof, wherein:
- Figure 1 schematically illustrates a pouch of cohesionless material from above;
- Figure 2 is a schematic side view of an embodiment of the machine object of the present invention;
- Figure 3 is an enlarged perspective view of part of the machine of Figure 2;
- Figure 4 is a perspective view of part of the machine of Figures 2 and 3;
- Figures 5 and 6 are schematic side views of the first welding means of the machine of Figure 2, in which the abutment element is in the first position and in the second position, respectively;
- Figures 5A and 6A are sectional views of Figures 5 and 6 along section A-A, respectively;
- Figure 7 is similar to Figure 4 but with a different embodiment of the abutment element;
- Figures 8-11 are schematic sectional views of the first welding means of Figure 7 in respective operating positions.

### PREFERRED EMBODIMENTS OF THE INVENTION

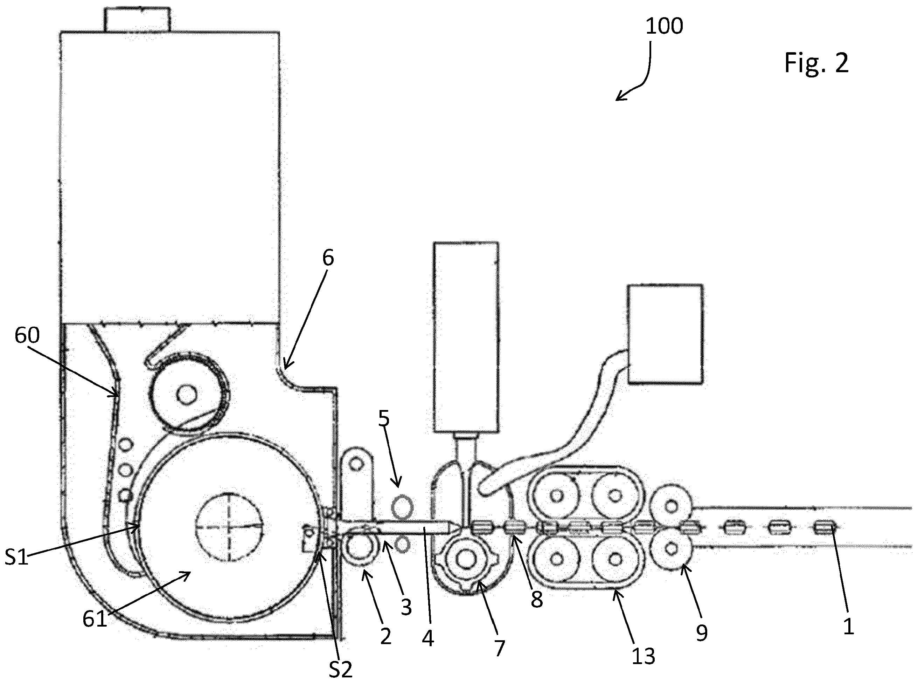

With reference to Figure 2, reference number 100 denotes a machine, object of the present invention, for manufacturing pouches of cohesionless material, in particular intended for oral use.

The term "cohesionless material" refers to any non-compact material. Preferably, said cohesionless material is a material of the tobacco industry such as loose tobacco or a bulk material comprising nicotine. Alternatively, the cohesionless material could be a material from the pharmaceutical industry or the food industry.

In particular, the machine 100 object of the present invention is a machine for manufacturing pouches 1 for the tobacco industry (said pouches 1 are commonly known as *"snus*")*.*

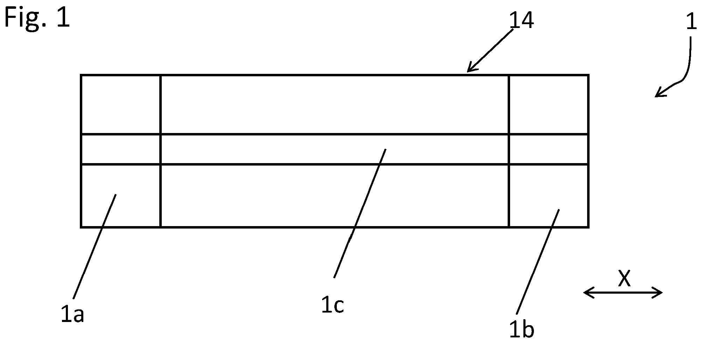

With reference to Figure 1, a pouch 1 of cohesionless material obtained from the machine 100 object of the present invention is described.

A pouch 1 has a substantially rectangular shape having a longitudinal development direction X.

The pouch 1 comprises a wrap 14 which contains a dose of cohesionless material (not illustrated). The wrap 14 is made of a non-woven fabric type material. The wrap 14 encloses the dose of cohesionless material closed by means of three welds: a longitudinal weld 1c which extends parallel to the longitudinal development direction X of the pouch 1 and two transverse welds 1a, 1b, which extend transversely (perpendicular) to the longitudinal development direction X of the pouch 1.

Preferably, the two transverse welds 1a, 1b have the same length (measured parallel to the development direction X of the pouch 1). Furthermore, the two transverse welds 1a, 1b define two substantially flat ends of the pouch 1.

The longitudinal weld 1c has a length (measured parallel to the development direction X of the pouch 1) equal to the length of the pouch 1.

With reference to Figures 2-6A, a first embodiment of the machine 100 object of the present invention is described in the following.

The machine 100 comprises: conveying means 2 for conveying a band of wrapping material along a packaging path (preferably the band of wrapping material is unwound from a reel); a wrapping station 3 arranged along the packaging path where the band of wrapping material is wound to form a tubular element 4 having a longitudinal development (that is, a development substantially parallel to the packaging path); first welding means 5 comprising a welding surface 50 and an abutment element 51 that comprises a first face 51a and which is arranged opposite to the welding surface 50 for longitudinally welding the tubular element 4 in the area of a respective welding portion; feeding means 6 of the cohesionless material for feeding doses of cohesionless material inside the tubular element 4; second welding means 7 for transversely welding the tubular element 4 so as to form a continuous and alternating succession 8 of welding areas and areas containing a dose of cohesionless material; cutting means 9 for transversely cutting the continuous succession 8 at the welding areas so as to form pouches 1 of cohesionless material.

According to the present invention, the abutment element 51 comprises a second face 51b which is connected to the first face 51a. Furthermore, the abutment element 51 is movable between a first position "A" in which the tubular element **4,** in particular the welding portion of the tubular element **4,** is arranged between the welding surface 50 and the first face 51a of the abutment element 51 and a second position "B" in which the tubular element **4,** in particular the welding portion of the tubular element 4, is arranged between the welding surface 50 and the second face 51b of the abutment element 51.

Advantageously, the aforementioned conformation of the abutment element 51 and the possibility of moving the same between the first position "A" and the second position "B" allow to reduce the maintenance (intervention) times of the machine 100. In fact, when the first face 51a of the abutment element 51 is worn, it will be sufficient to stop the machine 100 and move the abutment element 51 to the second position "B". This operation does not require the removal and reinserting of the band of wrapping material intended to form the tubular element 4. Therefore, the stopping time of the machine 100 object of the present invention is extremely reduced compared to the stopping time of known machines.

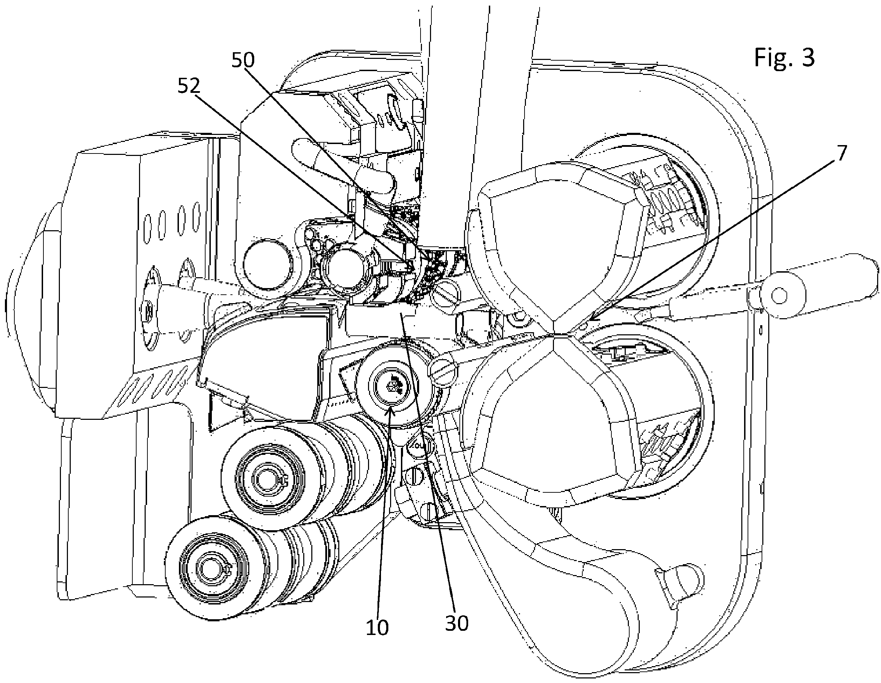

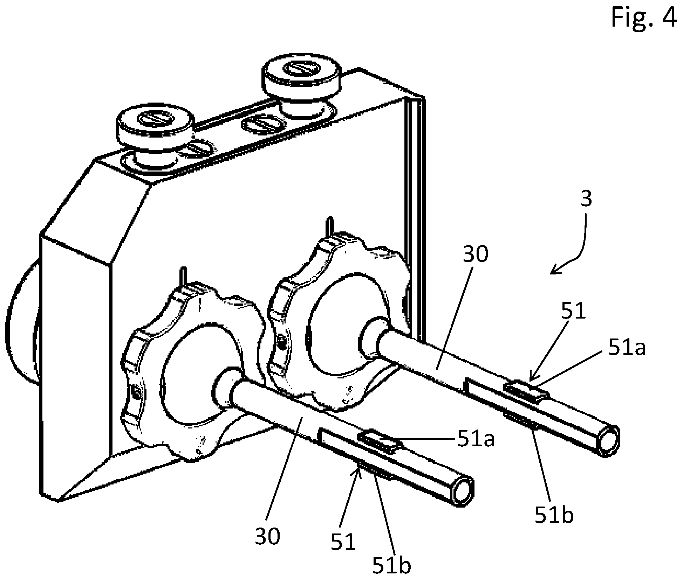

With particular reference to Figures 3 and 4, the wrapping station 3 comprises a tubular mandrel 30 around which the band of wrapping material is progressively wound to form the tubular element 4.

The tubular mandrel 30 has a circular cross section, preferably having a circular crown. Furthermore, the wrapping station 3 comprises folding elements (not illustrated) which fold the band of wrapping material around the mandrel 30.

With reference to the embodiment of the machine 100 illustrated in Figure 2, the feeding means 6 of the cohesionless material comprise: a hopper 60 containing the cohesionless material; a rotating conveyor 61 which is movable between a loading station S1, in which it receives the cohesionless material from the hopper 60, and a transfer station S2, in which it transfers the cohesionless material inside the tubular mandrel 30 of the wrapping station 3. Therefore, the mandrel 30 in addition to the function of forming the tubular element 4 performs a function of transferring the doses of cohesionless material from the rotating conveyor 61 to the tubular element **4.**

The rotating conveyor 61 is formed by a drum with an intermittently rotating horizontal axis which provides a suction source in the area of the loading station S1 and a compressed air source in the area of the transfer station S2. In use, as the rotating conveyor 61 rotates, a continuous rod of cohesionless material gradually forms on the skirt of the rotating conveyor 61 (due to the suction source).

The continuous rod of cohesionless material is conveyed to the transfer station S2 where, due to the compressed air source, doses of cohesionless material are separated from the continuous rod and transferred along the mandrel 30 until they are deposited on the band of wrapping material shaped as a tubular element 4.

Preferably, one or more sources of compressed air can also be provided along the mandrel 30 to facilitate the transfer of the dose of cohesionless material along the mandrel 30.

The tubular element 4 has a longitudinal development axis. Said longitudinal development axis is substantially parallel to the packaging path.

The first welding means 5 perform a weld parallel to the development axis of the tubular element 4 (that is, a weld substantially parallel to the packaging path).

The first welding means 5 can be arranged in the area of the wrapping station 3, in particular in the area of the mandrel 30. In this preferred embodiment, with reference to Figures 4-6, the abutment element 51 is arranged in the area of the outer surface of the mandrel 30.

Alternatively, the first welding means 5 can be arranged downstream of the wrapping station 3, in particular downstream of the mandrel 30 (embodiment not illustrated).

With further reference to the machine 100 illustrated in Figures 2-6A, the abutment element 51 is C-shaped. Preferably, the abutment element 51 is made as a single body. Alternatively, the abutment element 51 can be formed by several faces rigidly fixed to one another.

With particular reference to Figures 4-6A, the abutment element 51 is formed by three faces: the first face 51a; the second face 51b opposite and substantially parallel to the first face 51a; and a third face 51c which connects the first face 51a and the second face 51b. The first face 51a, the second face 51b and the third face 51c are connected to one another at right or rounded edges.

Preferably, the abutment element 51 is arranged in the area of the outer surface of the mandrel 30. In particular, the abutment element 51 is arranged coaxial with the mandrel 30. The abutment element 51 can be fixed by interlocking with the mandrel 30.

In order to move the abutment element 51 between the first position "A" and the second position "B", the abutment element 51 is movable in rotation around an axis parallel to the development axis of the tubular element 4. In particular, with reference to the Figure 4, the abutment element 51 is movable in rotation around the tubular mandrel 30. Advantageously, it is extremely simple to move the abutment element 51 between the first position "A" and the second position "B" (and vice versa).

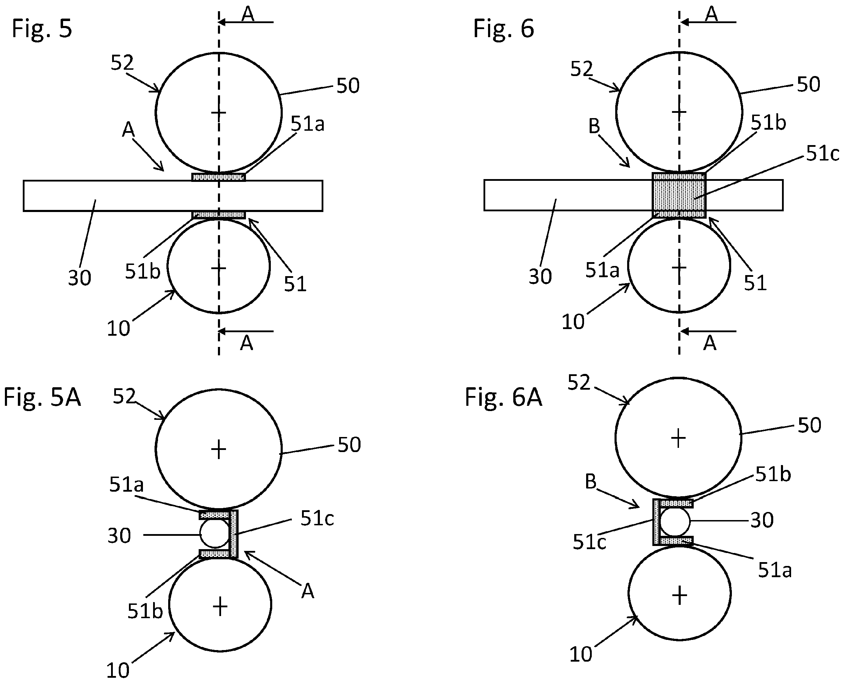

Therefore, assuming that the machine 100 is in operation with the abutment element 51 in the first position "A" as illustrated in Figures 4, 5 and 5A (that is, with the first face 51a cooperating with the welding surface 50), to perform maintenance on the abutment element 51, the following steps must be carried out: stopping the machine 100 when the first face 51a of the abutment element 51 is worn; moving the abutment element 51 to the second position "B" as illustrated in Figures 6 and 6A (in particular, rotating the abutment element 51 around the axis of the tubular mandrel 30 by approximately 180° from the first position "A" to the second position "B" ); starting the machine again 100.

Therefore, without having to remove the band of wrapping material intended to form the tubular element 4, it is possible to replace the face of the abutment element 51 which cooperates with the welding surface 50. Advantageously, the maintenance time of the machine 100 is reduced.

With reference to the abutment element 51 illustrated in Figures 2-6, the third face 51c of the abutment element 51 is a connecting face between the first face 51a and the second face 51b. In other words, the third face 51c is not used as an abutment element for the welding surface 50, that is, the third face 51c is never arranged opposite to the welding surface 50.

According to an embodiment not illustrated, the abutment element 51 is movable between the first position "A", the second position "B" and a third position in which the tubular element 4, in particular the welding portion of the tubular element 4, is arranged between the welding surface 50 and the third face 51c of the abutment element 51. In this case, assuming that the machine 100 is in operation with the abutment element 51 in the first position "A" (that is, with the first face 51a which cooperates with the welding surface 50), in order to perform maintenance on the abutment element 51, the following steps must be carried out: stopping the machine 100 when the first face 51a of the abutment element 51 is worn; moving the abutment element 51 in the third position (in particular rotating by about 90°, around the axis of the tubular mandrel 30, the abutment element 51 from the first position "A" to the third position); starting the machine 100 again. At this point, when the third face 51c is also worn, stopping the machine 100 and moving the abutment element 51 to the second position "B" (in particular, rotating by about 90°, around the axis of the tubular mandrel 30, the abutment element 51 from the third position to the second position "B").

It is understood that the order in which the abutment element 51 is moved between the various positions is not relevant.

Preferably, the first face 51a and the second face 51b of the abutment element 51 are made of a polymeric material. For example, the first face 51a and the second face 51b of the abutment element 51 are made of Teflon.

According to a preferred embodiment, the third face 51c is also made of a polymeric material, in particular Teflon.

With further reference to Figure 2, the second welding means 7 operate intermittently in step with the feeding of the doses of cohesionless material. Said second welding means 7 transversely weld the tubular element 4 so as to form a continuous and alternating succession 8 of welding areas and areas containing a dose of cohesionless material.

In other words, following the action of the second welding means 7, a continuous succession 8 of pouches 1 of cohesionless material is formed.

Downstream of the second welding means 7, the continuous succession 8 of pouches 1 is separated from the cutting means 9 thus forming the single pouches 1 of cohesionless material.

Downstream of the second welding means 7 and upstream of the cutting means 9, the machine 100 comprises driving means 13 for the continuous succession 8. With reference to the machine 100 illustrated in Figure 2, said driving means 13 comprise a pair of opposite belt conveyors wound in a loop around respective pulleys. Alternatively, the driving means 13 can comprise a pair of driving belts each wound around three pulleys.

Preferably, downstream of the second welding means 7 and upstream of the cutting means 9, the machine 10 comprises at least one sensor (not illustrated), for example of the optical type (camera). Said sensor has the purpose of detecting, in the area of the continuous succession 8 (that is, before the transverse cut) one or more of the following characteristics: the presence of a dose of cohesionless material at each area; and/or the quality of the transversal welds performed by the second welding means 7 (for example the uniformity and/or regularity of the edges and/or the width of the transversal welding being equal to the width of the pouch 1); and/or the presence of cohesionless material at the transversal welding areas (this material could cause an insecure sealing of the transversal welds).

Furthermore, the machine 100 can comprise at least one further sensor (not illustrated) arranged downstream of the cutting means 9 to detect the length of the first weld 1a and/or the length of the second weld 1b of the pouches 1 of cohesionless material (in particular, of all pouches 1). Said further sensor can be of the optical type such as for example a high-resolution camera.

The aforementioned sensors are connected to a control unit which receives the data from the sensors and compares the same with a range of pre-set values.

Furthermore, said control unit can be connected to the cutting means 9 to control the cutting means 9 so that the cut is performed at the middle of each welding area of the continuous succession 8. In other words, the control unit 11 controls the cutting means 9 in relation to the feeding speed of the continuous succession 8 of pouches 1 of cohesionless material: the control unit 11 controls the cutting means 9 so as to ensure the action thereof at the middle of each welding area. In other words, the cutting means 9 are controlled in feedback by the control unit 11 on the basis of the data detected by the sensor arranged downstream of the cutting means 9.

According to a preferred embodiment, the machine 100 comprises discard means (not illustrated) for discarding a pouch 1 of cohesionless material. The control unit controls the discard means based on the data received from the sensors. The discard means can comprise a pusher and/or a source of compressed air.

With particular reference to Figure 3, the first welding means 5 comprise a roller 52 which carries the welding surface 50. In particular, the roller 52 rotates around an axis orthogonal to the packaging path (and orthogonal to the development axis of the tubular element 4). In other words, the roller 52 is a horizontal axis roller. The roller 52 is set in continuous rotation so as to achieve a continuous longitudinal weld on the band of wrapping material.

Preferably, the welding surface 50 extends over the peripheral skirt of the roller 52. Furthermore, the welding surface 50 is a surface having a circular development.

According to a particular embodiment, the machine 100 comprises a driving roller 10 (Figure 3) which is motorized and that is arranged opposite to the welding surface 50 (in particular it is opposite to the roller 52 of the first welding means 5). In detail, the tubular element 4 is arranged between the driving roller 10 and the welding surface 50 of the first welding means 5.

Advantageously, the driving roller 10 favours the movement of the tubular element 4 along the packaging path.

The driving roller 10 is a roller having a horizontal rotation axis. In other words, the driving roller 10 rotates around an axis orthogonal to the development axis of the tubular element 4. Preferably, the driving roller 10 rotates around an axis parallel to the rotation axis of the roller 52 of the first welding means 5.

It should be noted that in Figure 3 the abutment element 51 is not illustrated.

The machine 100 illustrated in Figures 2-6 is a double line machine. In other words, the machine 100 provides two packaging paths substantially parallel to one another along which two successions 8 parallel to one another are formed which result in two parallel outputs of pouches 1 of cohesionless material. The feeding means 6 are shaped so as to simultaneously feed two doses of cohesionless material to respective tubular elements 4 along substantially parallel packaging paths.

It is understood that the machine 100 object of the present invention can be a single line machine (not illustrated) or a double line machine (like the one illustrated).

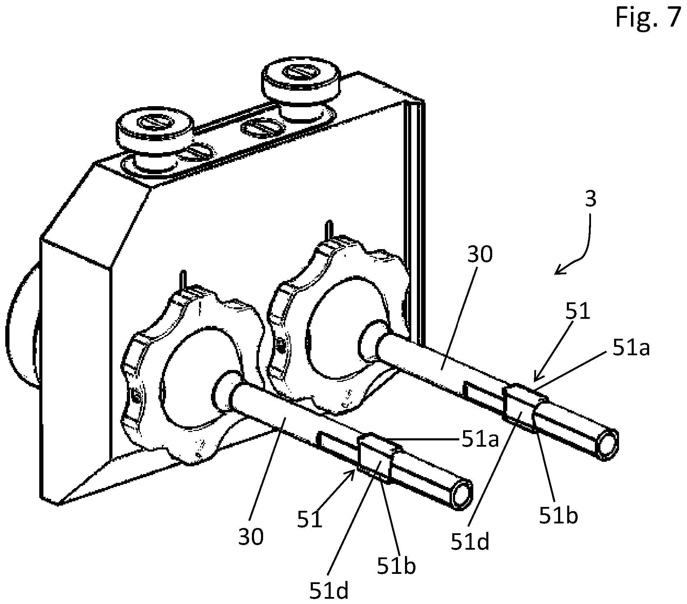

With reference to Figures 7-11, an alternative abutment element 51 with respect to what has been described above with reference to Figures 2-6 is illustrated. All the other characteristics of the machine 100 described with reference to Figures 2-6 are also valid with reference to Figures 7-11.

With reference to Figure 7, the abutment element 51 is tubular-shaped. In other words, the abutment element 51 has a cross section that defines a closed profile.

Preferably, the abutment element 51 has a square cross section. Alternatively, the abutment element 51 could have a circular cross section. Furthermore, as a further alternative, the abutment element 51 could have an inner surface having a circular cross-section and an outer surface having a square or rectangular cross-section.

Preferably, the abutment element 51 is made as a single body. Alternatively, the abutment element 51 can be made in several parts rigidly locked to one another.

In particular, the abutment element 51 is formed by four faces: the first face 51a; the second face 51b opposite and substantially parallel to the first face 51a; a third face 51c connecting the first face 51a and the second face 51b; a fourth face 51d which connects the first face 51a and the second face 51b and that is opposite and parallel to the third face 51c. The first face 51a, the second face 51b, the third face 51c and the fourth face 51d are connected to one another at right or rounded corners.

Preferably, the abutment element 51 is arranged in the area of the outer surface of the mandrel 30. In particular, the abutment element 51 is arranged coaxial with the mandrel 30. The abutment element 51 can be slidably inserted on the mandrel 30.

In said embodiment, the abutment element 51 is movable between the first position "A", the second position "B", a third position "C" in which the tubular element 4, in particular the welding portion of the tubular element 4, is arranged between the welding surface 50 and the third face 51c of the abutment element 51, and a fourth position "D" in which the tubular element 4, in particular the welding portion of the tubular element 4, is arranged between the welding surface 50 and the fourth face 51d of abutment element 51.

In order to move the abutment element 51 between the first position "A", the second position "B", the third position "C", the fourth position "D", the abutment element 51 is movable in rotation around an axis parallel to the development axis of the tubular element 4. In particular, with reference to Figure 4, the abutment element 51 is movable in rotation around the tubular mandrel 30 (that is, the development axis of the mandrel 30).

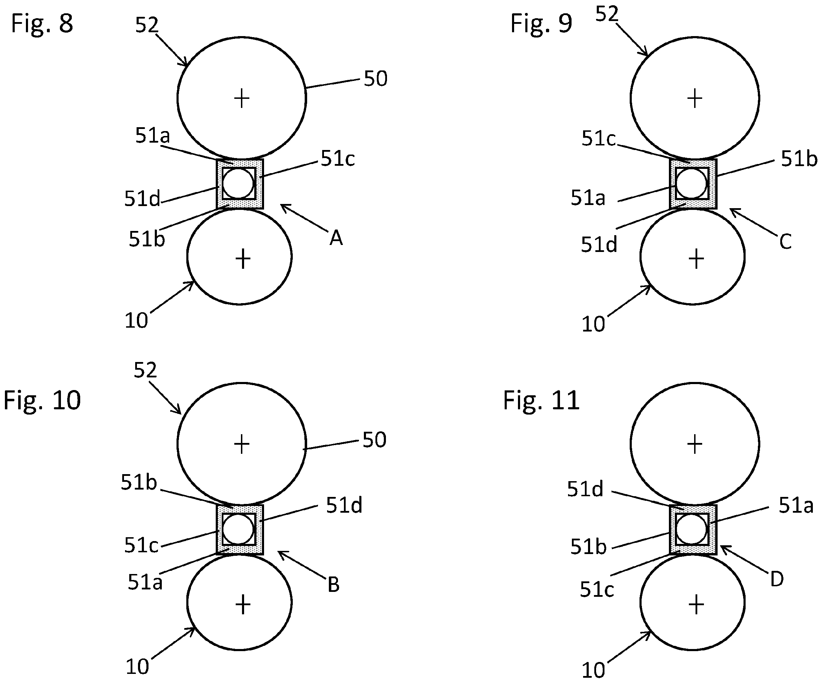

Therefore, assuming that the machine 100 is in operation with the abutment element 51 in the first position "A" as illustrated in Figures 7 and 8 (that is, with the first face 51a cooperating with the welding surface 50), to perform a maintenance operation on the abutment element 51, the following steps must be carried out: stopping the machine 100 when the first face 51a of the abutment element 51 is worn; moving the abutment element 51 in the third position "C" illustrated in Figure 9 (in particular rotating the abutment element 51 by about 90° counter clockwise around the axis of the tubular mandrel 30); starting the machine 100 again. At this point, when the third face 51c is also worn, stopping the machine 100 and moving the abutment element 51 into the second position "B" illustrated in Figure 10 (in particular, rotating the abutment element by about 90° counter clockwise 51 around the axis of the tubular mandrel 30) and starting the machine 100 again. When the second face 51b is also worn, stopping the machine 100 and moving the abutment element 51 to the fourth position "D" illustrated in Figure 11 (in particular rotating by about 90° counter clockwise the abutment element 51 around the axis of the tubular mandrel 30) and starting the machine 100 again.

Advantageously, this conformation of the abutment element 51 allows maintenance to be carried out three times on the machine 100 in order to provide intact abutment faces for the welding without ever having to remove and reinsert the band of wrapping material intended to form the tubular element **4.** This results in a reduction in maintenance times and an increase in the productivity of the machine 100.

Preferably, the first face 51a, the second face 51b, the third face 51c and the fourth face 51d of the abutment element 51 are made of a polymeric material (for example, Teflon).

With reference to Figures 8-11, a counter clockwise rotation of the abutment element 51 has been illustrated. It is understood that, alternatively, the abutment element 51 can be moved in a clockwise direction. Furthermore, the order in which the abutment element 51 takes the first position "A", the second position "B", the third position "C" and the fourth position "D" is not relevant.

The present invention also relates to a plant (not illustrated) for the production and packaging of pouches 1 of cohesionless material. This plant comprises a first machine for manufacturing pouches 1 of cohesionless material according to one of the embodiments described above and a second machine (not illustrated) for the packaging of pouches 1 of cohesionless material inside containers. Said second machine (not illustrated) is arranged downstream of the first machine 100 and comprises: means for feeding a plurality of packages (for example cans or envelopes) intended to contain the pouches 1 of cohesionless material; a delivery station in which a plurality of pouches 1 of cohesionless material is arranged inside a package.

The object of the present invention is also a maintenance method of the machine 100 according to any one of the embodiments described above. The method comprises, in order, the steps of:
- placing the abutment element 51 in the first position "A";
- starting the machine 100 for manufacturing pouches 1 of cohesionless material;
- stopping the machine 100 when the first face 51a of the abutment element 51 is worn;
- moving the abutment element 51 to the second position "B";
- starting the machine 100 for manufacturing pouches 1 of cohesionless material.

Advantageously, the proposed method allows for rapid maintenance of the machine 100.

With particular reference to Figures 5-6A, the maintenance method of the machine 100 comprises the steps of: arranging the abutment element 51 in the first position "A" (Figures 5, 5A); starting the machine 100 for manufacturing pouches 1 of cohesionless material; stopping the machine 100 when the first face 51a of the abutment element 51 is worn; moving the abutment element 51 in the second position "B" by rotating the same by 180° clockwise or counter clockwise around the axis of the mandrel 30 (Figures 6, 6A); starting the machine 100 for manufacturing pouches 1 of cohesionless material.

With particular reference to Figures 8-11, the maintenance method of the machine 100 comprises the steps of: arranging the abutment element 51 in the first position "A" (Figure 8); starting the machine 100 for manufacturing pouches 1 of cohesionless material; stopping the machine 100 when the first face 51a of the abutment element 51 is worn; moving the abutment element 51 in the third position "C" by rotating the same by 90° counter clockwise around the axis of the mandrel 30 (Figure 9); starting the machine 100 for manufacturing pouches 1 of cohesionless material; stopping the machine 100 when the third face 51c of the abutment element 51 is worn; moving the abutment element 51 in the second position "B" by rotating the same by 90° counter clockwise around the axis of the mandrel 30 (Figure 10); starting the machine 100 for manufacturing pouches 1 of cohesionless material; stopping the machine 100 when the second face 51b of the abutment element 51 is worn; moving the abutment element 51 in the fourth position "D" by rotating the same by 90° counter clockwise around the axis of the mandrel 30 (Figure 11); starting the machine 100 for manufacturing pouches 1 of cohesionless material.

Preferably, the step of moving the abutment element 51 from the first position "A" to the second position "B" (or vice versa) involves rotating the abutment element 51 around an axis parallel to the development axis of the tubular element 4. For example, the abutment element 51 can be rotated about 90° or about 180° (clockwise or counter clockwise).

Similarly, the step of moving the abutment element 51 from the first position "A" to the third position "C", to the second position "B" and to the fourth position "D" (or vice versa) involves rotating the abutment element 51 around an axis parallel to the development axis of the tubular element 4 (in particular around the development axis of the mandrel 30).

Preferably, the step of stopping the machine 100 when the first face 51a (or the second face 51b or the third face 51c or the fourth face 51d) of the abutment element 51 is worn provides for stopping the machine 100 after the production of a given number of pouches 1 of cohesionless material.

Advantageously, the probability of manufacturing defective pouches 1 due to wear of the abutment element 51 is reduced.

## Claims

1. A machine (100) for manufacturing pouches (1) of cohesionless material, in particular of the tobacco industry, comprising:
conveying means (2) for conveying a band of wrapping material along a packaging path;
a wrapping station (3) arranged along the packaging path and in which the band of wrapping material is wound to form a tubular element (4) having a longitudinal extension;
first welding means (5) comprising a welding surface (50) and an abutment element (51) that comprises a first face (51a) and which is arranged opposite to the welding surface (50) for longitudinally welding the tubular element (4) in the area of a respective welding portion;
feeding means (6) of the cohesionless material for feeding doses of cohesionless material inside the tubular element (4);
second welding means (7) for transversely welding the tubular element (4) so as to form a continuous and alternating succession (8) of welding areas and areas containing a dose of cohesionless material;
cutting means (9) for transversely cutting the continuous succession (8) at the welding areas so as to form pouches (1) of cohesionless material;
the machine (100) being **characterized in that:**
the abutment element (51) comprises a second face (51b) connected to the first face (51a);
the abutment element (51) is movable between a first position (A) in which the tubular element (4), in particular the respective welding portion of the tubular element (4), is arranged between the welding surface (50) and the first face (51a) of the abutment element (51) and a second position (B) in which the tubular element (4), in particular the respective welding portion of the tubular element (4), is arranged between the welding surface (50) and the second face (51b) of the abutment element (51).

2. The machine (100) according to claim 1, wherein the abutment element (51) is movable between the first position (A) and the second position (B) by rotating around an axis parallel to the development axis of the tubular element (4).

3. The machine (100) according to claim 1 or 2, wherein the abutment element (51) is C-shaped or is tubular-shaped.

4. The machine (100) according to claim 1, 2 or 3, wherein:
the wrapping station (3) comprises a tubular mandrel (30) around which the band of wrapping material is progressively wound to form the tubular element (4);
the abutment element (51) is arranged at the outer surface of the tubular mandrel (30).

5. The machine (100) according to claim 4, wherein the abutment element (51) is arranged coaxial to the tubular mandrel (30).

6. The machine (100) according to any one of the preceding claims, wherein the first face (51a) of the abutment element (51) and the second face (51b) of the abutment element (51) are opposite and parallel to one another.

7. The machine (100) according to claim 6, wherein:
the abutment element (51) is tubular-shaped and comprises a third face (51c) and a fourth face (51d) which are opposite and parallel to one another and that are connected to the first face (51a) and the second face (51b); and
the abutment element (51) is movable between the first position (A), the second position (B), a third position (C) in which the tubular element (4), in particular the respective welding portion of the tubular element (4), is arranged between the welding surface (50) and the third face (51c) of the abutment element (51), and a fourth position (D) in which the tubular element (4), in particular the respective welding portion of the tubular element (4), is arranged between the welding surface (50) and the fourth face (51d) of the abutment element (51).

8. The machine (100) according to any one of the preceding claims, wherein the first face (51a) and/or the second face (51b) and/or the third face (51c) and/or the fourth face (51d) of the abutment element (51) are made of a polymeric material, in particular Teflon.

9. The machine (100) according to any one of the preceding claims, wherein the first welding means (5) comprise a roller (52) that carries the welding surface (50) and which rotates around an axis orthogonal to the packaging path; in particular, the welding surface (50) being a circular surface.

10. The machine (100) according to any one of the preceding claims, comprising a driving roller (10) that is motorized and which is arranged opposite to the welding surface (50) of the first welding means (5) so that the tubular element (4) is arranged between said driving roller (10) and said welding surface (50) of the first welding means (5).

11. A maintenance method of the machine (100) according to any one of the preceding claims, wherein the method comprises in order the steps of:
• arranging the abutment element (51) in the first position (A);
• starting the machine (100) for manufacturing pouches (1) of cohesionless material;
• stopping the machine (100) when the first face (51a) of the abutment element (51) is worn;
• moving the abutment element (51) to the second position (B);
• starting the machine (100) for manufacturing pouches (1) of cohesionless material.

12. The method according to claim 11, wherein the step of moving the abutment element (51) from the first position (A) to the second position (B) comprises the step of rotating the abutment element (51) around an axis parallel to the development axis of the tubular element (4), in particular to rotate the abutment element (51) by about 90° or about 180°.

13. The method according to claim 11 or 12, wherein the step of stopping the machine (100) when the first face (51a) of the abutment element (51) is worn comprises the step of stopping the machine (100) after the production of a given number of pouches (1) of cohesionless material.

## Patentansprüche

1. Maschine (100) zum Herstellen von Beuteln (1) von kohäsionslosem Material, insbesondere der Tabakindustrie, umfassend:
Fördermittel (2) zum Befördern eines Streifens eines Umwicklungsmaterials entlang eines Verpackungswegs;
eine Wickelstation (3), die entlang des Verpackungswegs angeordnet ist und in der der Streifen des Umwicklungsmaterials auf eine Weise gewickelt wird, um ein röhrenförmiges Element (4) zu bilden, das eine Ausdehnung in Längsrichtung aufweist;
erste Schweißmittel (5), umfassend eine Schweißfläche (50) und ein Anlageelement (51), das eine erste Fläche (51a) umfasst und gegenüber der Schweißfläche (50) angeordnet ist, zum längsgerichteten Schweißen des röhrenförmigen Elements (4) in dem Bereich eines jeweiligen Schweißabschnitts;
Zuführmittel (6) des kohäsionslosen Materials zum Zuführen von Dosen des kohäsionslosen Materials in das Innere des röhrenförmigen Elements (4);
zweite Schweißmittel (7) zum quergerichteten Schweißen des röhrenförmigen Elements (4), um eine ununterbrochene und abwechselnde Abfolge (8) von Schweißbereichen und Bereichen, die eine Dosis des kohäsionslosen Materials enthalten, zu bilden;
Schneidmittel (9) zum quergerichteten Schneiden der ununterbrochenen Abfolge (8) an den Schweißbereichen, um Beutel (1) von kohäsionslosem Material zu bilden;
wobei die Maschine (100) **dadurch gekennzeichnet ist, dass:**
das Anlageelement (51) eine zweite Fläche (51b) umfasst, die mit der ersten Fläche (51a) verbunden ist;
das Anlageelement (51) zwischen einer ersten Position (A), in der das röhrenförmige Element (4), insbesondere der jeweilige Schweißabschnitt des röhrenförmigen Elements (4), zwischen der Schweißfläche (50) und der ersten Fläche (51a) des Anlageelements (51) angeordnet ist, und einer zweiten Position (B), in der das röhrenförmige Element (4), insbesondere der jeweilige Schweißabschnitt des röhrenförmigen Elements (4), zwischen der Schweißfläche (50) und der zweiten Fläche (51b) des Anlageelements (51) angeordnet ist, beweglich ist.

2. Maschine (100) nach Anspruch 1, wobei das Anlageelement (51) durch Drehen um eine Achse, die zu der Entwicklungsachse des röhrenförmigen Elements (4) parallel ist, zwischen der ersten Position (A) und der zweiten Position (B) beweglich ist.

3. Maschine (100) nach Anspruch 1 oder 2, wobei das Anlageelement (51) C-förmig ist oder röhrenförmig ist.

4. Maschine (100) nach Anspruch 1, 2 oder 3, wobei:
die Wickelstation (3) einen röhrenförmigen Dorn (30) umfasst, um den der Streifen des Umwicklungsmaterials fortschreitend gewickelt wird, um das röhrenförmige Element (4) zu bilden;
das Anlageelement (51) an der Außenfläche des röhrenförmigen Dorns (30) angeordnet ist.

5. Maschine (100) nach Anspruch 4, wobei das Anlageelement (51) koaxial zum röhrenförmigen Dorn (30) angeordnet ist.

6. Maschine (100) nach einem der vorhergehenden Ansprüche, wobei die erste Fläche (51a) des Anlageelements (51) und die zweite Fläche (51b) des Anlageelements (51) einander gegenüberliegen und zueinander parallel sind.

7. Maschine (100) nach Anspruch 6, wobei:
das Anlageelement (51) röhrenförmig ist und eine dritte Fläche (51c) und eine vierte Fläche (51d) umfasst, die einander gegenüberliegen und zueinander parallel sind und die mit der ersten Fläche (51a) und der zweiten Fläche (51b) verbunden sind; und
das Anlageelement (51) zwischen der ersten Position (A), der zweiten Position (B), einer dritten Position (C), in der das röhrenförmige Element (4), insbesondere der jeweilige Schweißabschnitt des röhrenförmigen Elements (4), zwischen der Schweißfläche (50) und der dritten Fläche (51c) des Anlageelements (51) angeordnet ist, und einer vierten Position (D), in der das röhrenförmige Element (4), insbesondere der jeweilige Schweißabschnitt des röhrenförmigen Elements (4), zwischen der Schweißfläche (50) und der vierten Fläche (51d) des Anlageelements (51) angeordnet ist, beweglich ist.

8. Maschine (100) nach einem der vorhergehenden Ansprüche, wobei die erste Fläche (51a) und/oder die zweite Fläche (51b) und/oder die dritte Fläche (51c) und/oder die vierte Fläche (51d) des Anlageelements (51) aus einem Polymermaterial, insbesondere Teflon, hergestellt sind.

9. Maschine (100) nach einem der vorhergehenden Ansprüche, wobei die ersten Schweißmittel (5) eine Walze (52) umfassen, die die Schweißfläche (50) trägt und die sich um eine Achse dreht, die zu dem Verpackungsweg senkrecht ist; wobei die Schweißfläche (50) insbesondere eine kreisförmige Fläche ist.

10. Maschine (100) nach einem der vorhergehenden Ansprüche, umfassend eine Antriebswalze (10), die motorisiert ist und die gegenüber der Schweißfläche (50) des ersten Schweißmittels (5) angeordnet ist, derart, dass das röhrenförmige Element (4) zwischen der Antriebswalze (10) und der Schweißfläche (50) des ersten Schweißmittels (5) angeordnet ist.

11. Wartungsverfahren der Maschine (100) nach einem der vorhergehenden Ansprüche, wobei das Verfahren in Reihenfolge die Schritte umfasst:
• Anordnen des Anlageelements (51) in der ersten Position (A);
• Starten der Maschine (100) zum Herstellen von Beuteln (1) von kohäsionslosem Material;
• Anhalten der Maschine (100), wenn die erste Fläche (51a) des Anlageelements (51) abgenutzt ist;
• Bewegen des Anlageelements (51) in die zweite Position (B);
• Starten der Maschine (100) zum Herstellen von Beuteln (1) von kohäsionslosem Material.

12. Verfahren nach Anspruch 11, wobei der Schritt des Bewegens des Anlageelements (51) aus der ersten Position (A) in die zweite Position (B) den Schritt des Drehens des Anlageelements (51) um eine Achse, die zu der Entwicklungsachse des röhrenförmigen Elements (4) parallel ist, insbesondere um das Anlageelement (51) um etwa 90° oder etwa 180° zu drehen, umfasst.

13. Verfahren nach Anspruch 11 oder 12, wobei der Schritt des Anhaltens der Maschine (100), wenn die erste Fläche (51a) des Anlageelements (51) abgenutzt ist, den Schritt des Anhaltens der Maschine (100) nach der Produktion einer gegebenen Anzahl von Beuteln (1) von kohäsionslosem Material umfasst.

## Revendications

1. Machine (100) pour la fabrication de sachets (1) de matériau pulvérulent, en particulier de l'industrie du tabac, comprenant :
des moyens de transport (2) pour transporter une bande de matériau d'emballage le long d'un parcours d'emballage ;
une station d'emballage (3) agencée le long du parcours d'emballage et dans laquelle la bande de matériau d'emballage est enroulée pour former un élément tubulaire (4) ayant une extension longitudinale ;
des premiers moyens de soudage (5) comprenant une surface de soudage (50) et un élément de butée (51) qui comprend une première face (51a) et qui est agencé à l'opposé de la surface de soudage (50) pour souder longitudinalement l'élément tubulaire (4) dans la zone d'une partie de soudage respective ;
des moyens d'alimentation (6) du matériau pulvérulent pour l'alimentation de doses de matériau pulvérulent à l'intérieur de l'élément tubulaire (4) ;
des deuxièmes moyens de soudage (7) pour souder, de manière transversale, l'élément tubulaire (4) afin de former une succession continue et alternée (8) de zones de soudage et de zones contenant une dose de matériau pulvérulent ;
des moyens de coupe (9) pour couper, de manière transversale, la succession continue (8) au niveau des zones de soudage afin de former des sachets (1) de matériau pulvérulent ;
la machine (100) étant **caractérisée en ce que** :
l'élément de butée (51) comprend une deuxième face (51b) raccordée à la première face (51a) ;
l'élément de butée (51) est mobile entre une première position (A) dans laquelle l'élément tubulaire (4), en particulier la partie de soudage respective de l'élément tubulaire (4), est agencé entre la surface de soudage (50) et la première face (51a) de l'élément de butée (51) et une deuxième position (B) dans laquelle l'élément tubulaire (4), en particulier la partie de soudage respective de l'élément tubulaire (4), est agencé entre la surface de soudage (50) et la deuxième face (51b) de l'élément de butée (51).

2. Machine (100) selon la revendication 1, dans laquelle l'élément de butée (51) est mobile entre la première position (A) et la deuxième position (B) en tournant autour d'un axe parallèle à l'axe de développement de l'élément tubulaire (4).

3. Machine (100) selon la revendication 1 ou 2, dans laquelle l'élément de butée (51) est en forme de C ou est de forme tubulaire.

4. Machine (100) selon la revendication 1, 2 ou 3, dans laquelle : la station d'emballage (3) comprend un mandrin tubulaire (30) autour duquel la bande de matériau d'emballage est progressivement enroulée afin de former l'élément tubulaire (4) ;
l'élément de butée (51) est agencé au niveau de la surface externe du mandrin tubulaire (30).

5. Machine (100) selon la revendication 4, dans laquelle l'élément de butée (51) est agencé de manière coaxiale au mandrin tubulaire (30).

6. Machine (100) selon l'une quelconque des revendications précédentes, dans laquelle la première face (51a) de l'élément de butée (51) et la deuxième face (51b) de l'élément de butée (51) sont opposées et parallèles entre elles.

7. Machine (100) selon la revendication 6, dans laquelle :
l'élément de butée (51) est de forme tubulaire et comprend une troisième face (51c) et une quatrième face (51d) qui sont opposées et parallèles entre elles et qui sont raccordées à la première face (51a) et à la deuxième face (51b) ; et
l'élément de butée (51) est mobile entre la première position (A), la deuxième position (B), une troisième position (C) dans laquelle l'élément tubulaire (4), en particulier la partie de soudage respective de l'élément tubulaire (4), est agencé entre la surface de soudage (50) et la troisième face (51c) de l'élément de butée (51) et une quatrième position (D) dans laquelle l'élément tubulaire (4), en particulier la partie de soudage respective de l'élément tubulaire (4), est agencé entre la surface de soudage (50) et la quatrième face (51d) de l'élément de butée (51).

8. Machine (100) selon l'une quelconque des revendications précédentes, dans laquelle la première face (51a) et/ou la deuxième face (51b) et/ou la troisième face (51c) et/ou la quatrième face (51d) de l'élément de butée (51) sont réalisées avec un matériau polymère, en particulier du Teflon.

9. Machine (100) selon l'une quelconque des revendications précédentes, dans laquelle les premiers moyens de soudage (5) comprennent un rouleau (52) qui porte la surface de soudage (50) et qui tourne autour d'un axe orthogonal au parcours d'emballage ; en particulier, la surface de soudage (50) étant une surface circulaire.

10. Machine (100) selon l'une quelconque des revendications précédentes, comprenant un rouleau d'entraînement (10) qui est motorisé et qui est agencé à l'opposé de la surface de soudage (50) des premiers moyens de soudage (5) de sorte que l'élément tubulaire (4) est agencé entre ledit rouleau d'entraînement (10) et ladite surface de soudage (50) des premiers moyens de soudage (5).

11. Procédé de maintenance de la machine (100) selon l'une quelconque des revendications précédentes, dans lequel le procédé comprend dans l'ordre les étapes comprenant les faits de :
agencer l'élément de butée (51) dans la première position (A) ;
démarrer la machine (100) pour la fabrication de sachets (1) de matériau pulvérulent ;
arrêter la machine (100) lorsque la première face (51a) de l'élément de butée (51) est usée ;
déplacer l'élément de butée (51) dans la deuxième position (B) ;
démarrer la machine (100) pour la fabrication de sachets (1) de matériau pulvérulent.

12. Procédé selon la revendication 11, dans lequel l'étape comprenant le fait de déplacer l'élément de butée (51) de la première position (A) à la deuxième position (B) comprend l'étape comprenant le fait de faire tourner l'élément de butée (51) autour d'un axe parallèle à l'axe de développement de l'élément tubulaire (4), en particulier pour faire tourner l'élément de butée (51) d'environ 90° ou d'environ 180°.

13. Procédé selon la revendication 11 ou 12, dans lequel l'étape comprenant le fait d'arrêter la machine (100) lorsque la première face (51a) de l'élément de butée (51) est usée, comprend l'étape comprenant le fait d'arrêter la machine (100) après la production d'un nombre donné de sachets (1) de matériau pulvérulent.
